Europäisches Patentamt

European Patent Office

Office européen des brevets

(19)

(11) Veröffentlichungsnummer: **0 231 813**
B1

# (12) EUROPÄISCHE PATENTSCHRIFT

(45) Veröffentlichungstag der Patentschrift:
20.06.90

(21) Anmeldenummer: 87100770.4

(22) Anmeldetag: 21.01.87

(51) Int. Cl.⁵: **B27G 21/00**, B23Q 11/00

(54) **Dicken- und Abrichthobelmaschine.**

(30) Priorität: 04.02.86 DE 8602800 U

(43) Veröffentlichungstag der Anmeldung:
12.08.87 Patentblatt 87/33

(45) Bekanntmachung des Hinweises auf die Patenterteilung:
20.06.90 Patentblatt 90/25

(84) Benannte Vertragsstaaten:
AT CH DE FR IT LI

(56) Entgegenhaltungen:
DE-A- 2 107 139
DE-C- 340 134
DE-C- 543 496
DE-U- 8 610 494
FR-A- 471 508
FR-A- 561 184
FR-A- 1 034 856
FR-A- 1 347 868
GB-A- 241 702
US-A- 1 394 499
US-A- 1 630 671
US-A- 2 064 172

C.H. HAYWARD: "Light Machines for
Woodworking", 1952, Seite 96, Evans Brothers Ltd,
London, GB

(73) Patentinhaber: Mafell Maschinenfabrik Rudolf Mey
GmbH & Co. KG, Postfach 1180, D-7238 Oberndorf a.
N.(DE)

(72) Erfinder: Heinzelmann, Werner, Felbenstrasse 3,
D-7238 Oberndorf(DE)

(74) Vertreter: Patentanwälte Dipl.-Ing. B. Schmid Dr.-Ing.
G.A. Birn Dipl.-Ing. H. Quarder, Falbenhennenstrasse 17,
D-7000 Stuttgart 1(DE)

# Beschreibung

Die Erfindung bezieht sich auf eine Dicken- und Abrichthobelmaschine mit einem eine flache Abdeckung für die Hobelwelle bildenden, in einem seitlich der Hobelwelle angeordneten, nach oben offenen, etwa C-förmigen, parallel zur Hobelwelle längsverschiebbar an der Maschine gelagerten Späneleitblech, dessen beide Randbereiche als Führungselemente ausgebildet sind, die in die beiden Führungen des Führungselements eingreifen. Eine derartige Maschine ist beispielsweise durch das Buch «Light Machines for Woodworking», 1952, Seite 96, Evans Brothers Ltd, London, bekanntgeworden. Je nach Dicke des zu hobelnden Werkstücks wird das Späneleitblech beim Abrichthobeln mehr oder weniger weit seitwärts verschoben. Dabei befindet es sich in einer zufällig gewählten Höhenlage, so daß ein durch das Späneleitblech und den Auflagetisch der Maschine für das zu hobelnde Werkstück gebildete Späneauswurfschlitz mehr oder weniger breit und hoch wird. Außerdem entsteht in Vorschubrichtung des Werkstücks sowohl am vorderen als auch am hinteren Ende des Späneleitblechs je ein Späneauswurfschlitz. Dieses Späneleitblech übernimmt in erster Linie die Funktion eines Abdeckblechs für die Hobelwelle. Wenn man es allerdings sehr hoch stellt, so ist noch nicht einmal diese Funktion besonders gut. Damit die Späne austreten können, muß man aber grundsätzlich das Späneleitblech auf ein gewisses Höhenniveau einstellen. Wie groß der Späneauswurfschlitz jeweils ist, hängt von der Bedienungsperson ab. Auch beim Dickenhobeln muß das Späneleitblech dieser vorbekannten Dicken- und Abrichthobelmaschine um ein von der Bedienungsperson festgelegtes Maß angehoben werden, damit die entstehenden Späne austreten können.

Durch die US-A 1 394 499 ist eine Abrichthobelmaschine mit einem ähnlichen verstellbaren Späneleitblech bekannt geworden. Die Nachteile dieser Konstruktion sind mit denen der vorstehend erörterten vergleichbar.

Die Aufgabe der Erfindung besteht nun darin, eine Dicken- und Abrichthobelmaschine der eingangs beschriebenen Art so weiterzubilden, daß ein einziger Späneauswurfschlitz mit vorbestimmter Größe vorhanden ist.

Zur Lösung dieser Aufgabe wird erfindungsgemäß vorgeschlagen, daß die Dicken- und Abrichthobelmaschine gemäß dem Oberbegriff des Anspruchs 1 entsprechend dem kennzeichnenden Teil dieses Anspruchs ausgebildet ist. Weil bei dieser Hobelmaschine das Späneleitblech ein ebenes oder wenigstens teilweise flach gewölbtes Deckblech sowie einen schienenartigen, im Querschnitt bogenförmigen Bodenteil aufweist, und diese beiden Teile über zwei ihren Enden zugeordneten Seitenbleche miteinander verbunden sind, entsteht ein kastenartiges, nach unten offenes Späneleitblech, dessen Späneauswurfschlitz eine durch den Höhenabstand von Deckblech und Bodenteil bestimmte, forderungsgemäß stets gleichbleibende Breite aufweist. Durch die Seitenbleche und das relativ steife Bodenteil erreicht man insgesamt eine sehr stabile, formbeständige Konstruktion des Späneleitblechs.

Beim Dickenhobeln nimmt das Späneleitblech seine eine beispielsweise einem Seitenanschlag zugeordnete Endstellung ab, in der es die Hobelwelle vollständig übergreift und somit eine Verletzungsgefahr verhindert. Beim Abrichten schiebt man es so weit zur Seite, daß die Hobelwelle auf einer der Breite des Werkstücks entsprechenden Länge freigegeben ist. Der restliche Teil der Hobelwelle wird vom Späneleitblech übergriffen und wirkt in bekannter Weise als sogenannte Verdeckung. Die flache Bauweise ermöglicht das ungehinderte Arbeiten beim Abrichthobeln. Die das Werkstück führende Hand kann infolgedessen in der bei den flachen Verdeckungen üblichen Art über das dem Werkstück zugekehrte Ende des Späneleitblechs hinwegbewegt werden. Ein Umsetzen der Hand auf dem Werkstück ist nicht erforderlich. Andererseits werden aber die Späne in bekannter Weise beim Dickenhobeln nach hinten ausgeworfen. Dabei befindet sich sowohl das vordere als auch das hintere Ende des Späneleitblechs auf Tischhöhe. Die Späne können nur über den fest vorgegebenen Späneaustrittschlitz nach außen gelangen, so daß ein unkontrolliertes Austreten aufgrund einer ungünstigen Höhenanordnung, wie man dies beim bekannten Stand der Technik vorfindet, ausgeschlossen ist.

Auf der anderen Seite ist das Reinigen und gegebenenfalls Freimachen des Späneleitblechs in Sekundenschnelle durchzuführen, indem man es seitlich herauszieht. Eventuell aufgestaute Späne fallen aufgrund der Schwerkrafteinwirkung von selbst heraus, weil das Späneleitblech auf nahezu seiner gesamten Unterseite offen ist.

Die Länge der Führung des Späneleitblechs ist so zu dimensionieren, daß ein verkantungsfreies Verschieben möglich ist.

Die Erfindung wird nachstehend anhand der Zeichnung näher erläutert. Die Zeichnung zeigt ein Ausführungsbeispiel der Erfindung.

Hierbei stellen dar:

Fig. 1 perspektivisch eine Dicken- und Abrichthobelmaschine beim Dickenhobeln,

Fig. 2 dieselbe Maschine beim Abrichten,

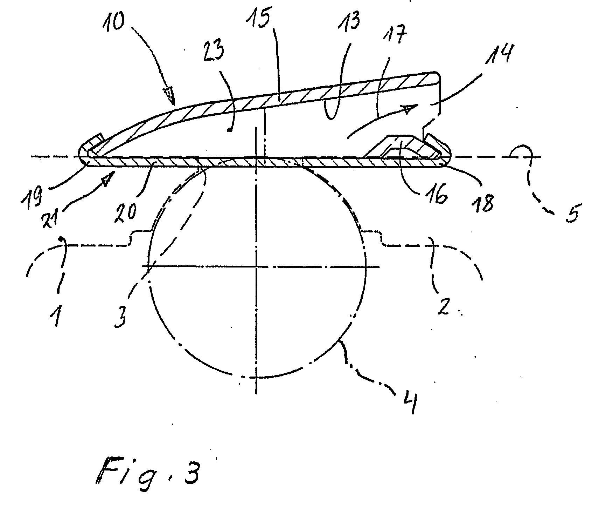

Fig. 3 in vergrößertem Maßstab einen Vertikalschnitt durch das Späneleitblech mit angedeuteter Hobelwelle.

Die Dicken- und Abrichthobelmaschine besitzt einen zweiteiligen oberen Maschinentisch 1, 2. Durch einen zwischen beiden Hälften gelegenen Schlitz 3 ragt die Hobelwelle 4 nach oben, wobei der Flugkreis der Hobelwellen-Messerschneiden tangential zur Auflagefläche 5 des Maschinentisch 1, 2 verläuft.

Ein unterer oder innerer Maschinentisch 6 od. dgl. dient zum Abstützen des Werkstücks 7 beim sogenannten Dickenhobeln. Dabei befindet sich dann die Hobelwelle 4 über der Oberseite 8 des Werkstücks 7 und hobelt diese eben. Zugleich wird das Werkstück auf Dicke gehobelt. Die dabei erzeugten Späne 9 treten über den Schlitz 3 aus. Damit sie nicht unkontrolliert im Arbeitsraum herumfliegen, befindet sich über dem Schlitz 3 ein Späneleitblech 10. Es ist im Sinne des Doppelpfeils 11 in Richtung seiner Längsachse verschiebbar am Maschinengehäuse 12 gelagert. Nach unten ist es offen, so daß die Späne zunächst in Richtung der Unterseite 13 des ebenen und an seinem vom Auswurfschlitz 14 entfernten Ende leicht gewölbten Deckblechs 15 geschleudert werden. Aufgrund des von der Hobelwelle erzeugten Luftstroms treten sie in annähernd horizontaler Richtung über den Auswurfschlitz 14 aus.

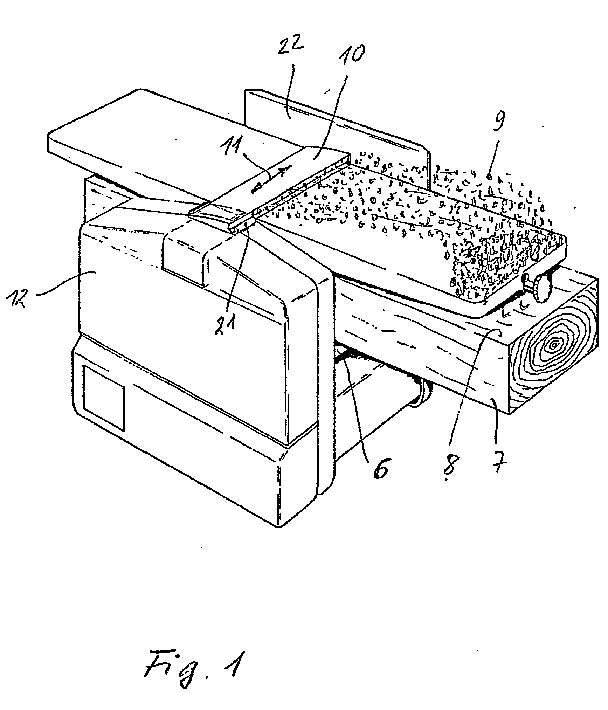

Im Bereich des Auswurfschlitzes 14 befindet sich ein schienenartiges, im Querschnitt bogenförmiges nach unten offenes Bodenteil 16, dessen in Austrittsrichtung 17 vorderes Ende in die vordere bogenförmige Führung 18 eingreift. In die hintere bogenförmige Führung 19 ragt der freie Rand des Deckblechs 15 hinein. Die beiden Führungen 18 und 19 sind durch ein ebenes Blech 20 miteinander verbunden und sie bilden damit ein nach oben offenes etwa C-förmiges Führungselement 21. Es befindet sich gemäß Fig. 1 am Maschinengehäuse 12 gegenüberliegend einem Längsanschlag 22. Im übrigen sind das Deckblech 15 und das Bodenteil 16 beidendig über Seitenbleche 23 miteinander verbunden.

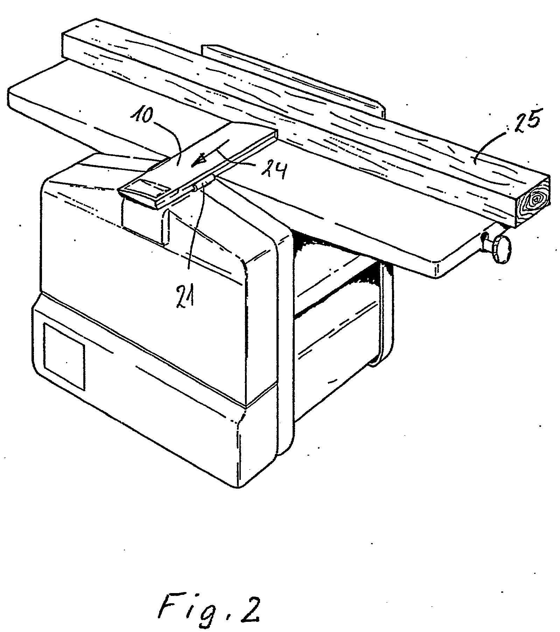

Beim Dickenhobeln (Fig. 1) überdeckt das Späneleitblech 10 die Hobelwelle 4 auf ihre gesamten Länge und der Auswurfschlitz 14 hat vom Flugkreis der Messerschneiden einen den Sicherheitsvorschriften entsprechenden Abstand. Die Höhe des Späneleitblechs ist sehr gering und sie liegt in der Größenordnung von 2 cm. Von der in Fig. 1 dargestellten einen Endlage kann das Späneleitblech 10 im Sinne des Pfeils 24 so weit zur Seite geschoben werden, daß die Hobelwelle zum einen Teil durch das abzurichtende Werkstück 25 und zum anderen Teil durch die noch wirksame Länge des Späneleitblechs 10 abgedeckt ist. Die das Werkstück 25 beim Abrichten führende Hand kann aufgrund der geringen Höhe des Späneleitblechs 10 auch beim "Überfahren" des Späneleitblechs am Werkstück verbleiben. Fig. 2 veranschaulicht die diesbezüglichen Höhen und Größenverhältnisse sehr deutlich. Infolgedessen übernimmt das Späneleitblech zugleich auch die Aufgabe der beispielsweise von der Berufsgenossenschaft vorgeschriebene "Verdeckung". Beim Abrichten treten die Hobelspäne nach unten aus. Die Breite des Bodenteils 16 entspricht etwa der Höhe des Auswurfsschlitzes und es verkleinert die Öffnung an der Unterseite des Späneleitblechs 10 nur ganz unwesentlich.

**Patentanspruch**

Dicken- und Abrichthobelmaschine mit einem eine flache Abdeckung für die Hobelwelle bildenden, in einem seitlich der Hobelwelle angeordneten, nach oben offenen, etwa C-förmigen Führungselement (21), parallel zur Hobelwelle (4) längsverschiebbar an der Maschine (12) gelagerten Späneleitblech (10), dessen beide Randbereiche als Führungselemente ausgebildet sind, die in je eine Führung (18, 19) des Führungselements (21) eingreifen, dadurch gekennzeichnet, daß das Späneleitblech (10) aus einem ebenen oder wenigstens teilweise flachgewölbten Deckblech (15) und einem schienenartigen, im Querschnitt bogenförmigen Bodenteil (16) steht, die über ihren Enden zugeordnete Seitenbleche (23) miteinander verbunden sind, wobei je ein Randbereich des Deckblechs und des Bodenteils ein Führungselement bildet.

**Claim**

Thicknessing and surface planing machine with a chip guide plate (10) which forms a flat covering for the plane shaft, is mounted in a guide component (21) – which is disposed laterally with respect to the plane shaft, is open at the top and is approximately C-shaped – such that it is longitudinally displaceable on the machine parallel to the plane shaft (4), and the two edge areas of which are formed as guide components which each engage in a guide (18, 19) of the guide component (21), characterised in that the chip guide plate (10) consists of a flat or at least partially flat curved cover sheet (15) and a rail-like base part (16), which is curved in cross-section, which are connected to one another by means of side plates (23) associated with their ends, each edge area of the cover plate and the base part forming a guide component.

**Revendication**

Raboteuse-dégauchisseuse comprenant un guide-copeaux (10) qui constitue un recouvrement plat pour la broche de rabotage, qui est monté sur la machine (12), en pouvant se déplacer longitudinalement, parallèlement à la broche de rabotage (4), dans un élément de guidage (21) disposé latéralement par rapport à la broche de rabotage, ouvert vers le haut et à peu près en forme de C, et dont les deux régions du bord sont réalisées sous la forme d'éléments de guidage pénétrant à chaque fois dans un guidage (18, 19) de l'élément de guidage (21), caractérisée par le fait que le guide-copeaux (10) se compose d'une tôle de couverture (15) plane, ou du moins légèrement cintrée en partie, et d'une pièce de fond (16), analogue à un rail et en forme d'arc en section transversale, qui sont reliées entre elles par des tôles latérales (23) associées à leurs extrémités, chaque région du bord de la tôle de couverture et de la pièce de fond constituant un élément de guidage.

Fig. 1

Fig. 2

Fig. 3

EP 0 231 813 B1